# EUROPEAN PATENT SPECIFICATION

(11) **EP 4 560 254 B1**
(45) Date of publication and mention of the grant of the patent: **12.08.2026**
(21) Application number: 23307049.9
(22) Date of filing: 24.11.2023
(51) Int. Cl.: F41G 3/26

(54) **METHOD FOR IMPROVING A SHOOTING TRAINING**
VERFAHREN ZUR VERBESSERUNG EINES SCHIESSTRAININGS
PROCÉDÉ D'AMÉLIORATION D'UN ENTRAÎNEMENT AU TIR

(43) Date of publication of application: 28.05.2025
(73) Proprietor: Thales, 92190 Meudon (FR)
(72) Inventor: LAGUARDA, Joachim, 33700 MERIGNAC (FR); GASSER, Rolf, 3014 Bern (CH); SIANI, Tomer, 3014 Bern (CH); ZENDER, Marco, 56070 Koblenz (DE)
(74) Representative: Atout PI Laplace

(56) References cited:
- US-A1- 2012 178 053
- US-A1- 2021 372 738
- US-B1- 8 400 619

## Description

### TECHNICAL FIELD

The present invention relates to a method and system for a shooting training of a shooting device on a target. In particular, the invention relates to a method and system used in live exercise shooting training or games.

### BACKGROUND

In live exercise shooting training, it is necessary to be able to provide an assessment, reliably and in real time, of the projectile shots fired, whether blank or simulated. Such requirements demand certain features from the analysis systems conceived. They must have a precision comparable to that which would be obtained in real situations, while being unobtrusive, i.e. requiring the least possible additional equipment mounted on both the shooting device and the target.

These requirements must address a number of practical operational obstacles such as the weight of the additional equipment installed, the performance (precision and latency), and the autonomy of the kit, as well as technological obstacles which are mainly the precision of the data recorded and analyzed, the reliability of the image analysis, the minimum computing power installed in the device, and the speed and consumption of the wireless link.

Currently, there are a number of methods for simulating projectiles in shooting training. A technique most commonly used is the a posteriori observation of the accuracy of the shot. If the shot is fired at a target, then the target serves as a support for checking the accuracy of the shot fired. If the shot is fired at a target, then the accuracy of the shot is analyzed by way of the impact of the ammunition (blank or via a paintball for example). Another technique is to film the target via an external device allowing the user to check the accuracy of the shot. A last approach is to use a laser system coupled to the firing of the shot and analyzed by an external device, for example by means of multiple markers mounted on different parts of the potential targets which transmit the information to a central system whether there is an impact or not.

The following references are an illustration of various devices of the prior art:
US 2021/0372738 A1 by Laguarda proposes a compact device for recording video images which may be mounted on a gun and used to record video images before and after the firing of the gun. The recording device comprises a camera comprising a lens and a video image sensor. The video recording device is mounted on the gun such that the viewing area of the camera comprises the target area of the gun. The video image sensor generates an electronic signal representative of a video image impinging on the respective sensor. The output of the image sensor is processed and generally employed to produce successive frame data which are sequentially stored in locations of a semiconductor memory organized as a circular buffer memory while the video recording device is in an active state. When the gun is fired, additional frames are stored in the buffer memory for a short period of time and a portion of the buffer memory is employed to keep a video record of the shooting both before and after the event. Additional frames are successively stored in the unused portion of the buffer memory.

US patent 8,022,986 by Jekel provides a shooting device orientation measurement device which comprises a processor configured to receive first location information indicative of the locations of a first and a second point on a shooting device, the first and second points being a known distance apart in a direction parallel to a pointing axis of the shooting device, and to receive second location information indicative of the locations of the first and second points on the shooting device. The processor is further configured to receive information indicative of a first terrestrial orientation and to determine a second terrestrial orientation corresponding to the shooting device based on the first and second location information and the information indicative of the first terrestrial orientation. The first location information represents a location relative to a first sensor at a first location and the second location information represents a location relative to a second sensor at a second location, and the first and second sensors are separated by a given distance.

Patent application US 2012/0178053 A1 by D'Souza et al. relates to a method and system for a shooting training system which automatically predicts the ballistics based on automatically gathered meteorological and distance information. The projectile shooting training system also confirms that manual efforts performed by an operator to adjust the sight turrets would or would not result in hitting the target after firing a shot. Both adjustment of the turrets and target settings are used to distinguish between the following states after firing a shot: hit; kill; miss; near miss. A light or other signal is sent from the shooting device to the target to indicate that a shot was fired by the shooting device.

US patent 8,400,619 B1 by Bachrach discloses an automatic target tracking system which employs an image capturing system for acquiring a series of images in real time of a distant area containing a remote target, and a processing system for processing the acquired images to identify the target and follow its position across the series of images.

The drawbacks of the existing methods are that, in general, shooting training requires an assessment of the shot fired to be provided in a way that is as close as possible to real ballistics while being free from the associated dangers. As a result, the analysis of a shot may be seen as a marking problem in which it is necessary to be able to label a target through certain opaque obstacles and fuzzy obstacles, or even via a curved trajectory.

A method known for more than 20 years for tackling this problem consists in equipping the potential targets with photosensitive sensors that are able to send information when they are illuminated by a laser. This method has several drawbacks: attenuation of the laser over great distances, the inability to shoot through fuzzy obstacles (e.g. foliage), and the need to equip the target with enough photosensitive sensors, among others. The number of photosensitive sensors necessary engenders heavy weight that is not representative to real field equipment, as well as high cost. Additionally, laser light is emitted in a straight line, which does not precisely represent the trajectory of a projectile.

To be usable, digital marking must be able to simulate a shot by assigning the impact of the projectile a random distribution close to that of a real shot. However, the techniques currently proposed do not allow this problem to be solved in a satisfactory manner.

### BRIEF SUMMARY OF THE INVENTION

These problems are solved or mitigated by the claimed method and system.

A first aspect of the method comprises a method for improving a shooting training with a shooting device on a target, the shooting device comprises a laser having an initial position and the target comprising one or more laser receivers, the method comprising:
- acquiring image or video data relating to the target with a camera comprised in the shooting device;
- analyzing the acquired image or video data of the target to determine pixels corresponding to at least one part of the target;
- determining a distance between the shooting device and the target based on the analysis and determining a position of one of the laser receivers;
- shooting a real or virtual projectile with the shooting device;
- determining the impact zone of the projectile on the target by calculating a trajectory from the shooting device to the target based on the distance determination and ballistic data from the projectile;
- deflecting the laser from the initial position to a new position based on the determined position of the of said one laser receiver; and
- transmitting with the laser at the new position to the laser receiver data relating to the determined impact zone and relating to the shot on the target.

The invention enables simultaneous and realistic estimation of the projectile trajectory, which engenders a more precise determination of the impact zone. Additionally, the system does not require placing a large number of sensors on users' equipment, which reduces the weight and therefore enable realistic training conditions, and reduces the costs.

Additionally, the invention enables using the laser for transmitting data instead of determining the impact zone, reducing the number of laser sensors. In particular, this mean of communication enables determining the position of the receiver target in the shooting device frame using the image analysis. Thus, this in turns enables communicating with the target by pointing the laser at it without knowing its "identification" or network address.

Advantageously, it is a point-to-point communication between the shooting device and the target, which does not rely on an external infrastructure network. Therefore, the communication between the shooting device and the target using the laser enables lowering the cost and ensuring an effective use of bandwidth.

Optionally, the data is transmitted if the projectile hits the target.

Optionally, the shooting device comprises a trigger to shoot the projectile on the target, the acquisition of the image or video data being triggered when the trigger is activated.

Advantageously, the steps of the method are performed automatically when a user pulls the trigger.

Optionally, the target is moving and the analysis step comprises: analyzing the motion of the target and determining a velocity of the target, and wherein the impact zone determination step comprises predicting the target position when the projectile reaches the target.

Advantageously, if the target is moving, it is possible to measure a future position of the target.

Optionally, the method comprises, acquiring further image or video data relating to the target prior to the step of transmitting data relating to the shot on the target.

Advantageously, if the target is moving, the further image or video data enable determining the kinematics of the target and thus its position at the transmitting time to ensure that the data relating to the shot is transmitted.

Optionally, the data relating to the shot on the target are chosen in a group consisting in a type of ammunition, identification information about a first user shooting the projectile, a time stamp and/or target coordinates and a combination thereof.

Advantageously, the data relating to the shot can be further for training purpose, damage assessment on the target side and optional report to an exercise monitoring station.

A second aspect of the invention provides a system for improving a shooting training with a shooting device on a target, the system comprising means to implement the method of any one of claims 1 to 6, the means comprising:
- the shooting device for shooting projectiles and comprising a camera for acquiring image or video data relating to the target, the shooting device further comprising a laser having an initial position;
- one or more receivers for receiving the data relating to the determined impact zone and relating to the shot on the target; and
- a processing unit comprising code instructions for analyzing the acquired image or video data of the target to determine pixels corresponding to at least one part of the target; for determining a distance between the shooting device and the target based on the analysis, determining a position of one of the laser receivers, for determining after a shooting of a projectile, the impact zone of the projectile on the target by calculating a trajectory from the shooting device on the target, based on the distance determination and ballistic data of the projectile deflecting the laser from the initial position to a new position based on the determined position the one laser receiver; and transmitting with the laser at the new position to the laser receiver the data relating to the determined impact zone and relating to the shot on the target,
wherein the shooting device further comprises a deflecting system configured to aim the laser at the one or more receivers.

Optionally, the deflecting system comprises micro-electromechanical systems.

Optionally, the diameter of the laser is adjustable based on the analysis of the video of image data.

Advantageously, it ensures that the receiver of the correct user is hit in case a group of users are nearby.

A third aspect of the invention provides a computer program product, said computer program product comprising code instructions for performing, when executed by a processing unit, the steps of:
- analyzing the acquired image or video data of the target to determine pixels corresponding to at least one part of the target;
- determining a distance between the shooting device and the target based on the analysis and determining a position of one of the laser receivers;
- determining the impact zone of the projectile on the target by calculating a trajectory from the shooting device to the target based on the distance determination and ballistic data from the projectile;
- deflecting the laser from the initial position to a new position based on the determined position of the of said one laser receiver; and
- transmitting with the laser at the new position to the laser receiver data relating to the determined impact zone and relating to the shot on the target.

The following description presents several examples of embodiment of the device of the invention: these examples are not limiting of the scope of the invention. These exemplary embodiments present both the essential characteristics of the invention as well as additional characteristics linked to the embodiments considered.

### BRIEF DESCRIPTION OF THE DRAWINGS

Embodiments of the invention will now be described with reference to the accompanying drawings, in which:
Fig. 1 is a flow diagram of a method for determining an impact zone of a shot from a shooting device on a target, according to the invention;
Fig. 2 is a schematic of a method for determining an impact zone of a shot from a shooting device on a target in use, according to an example;
Fig. 3 is a schematic of a method for determining a stance of a user according to an example;
Fig. 4a is a schematic of laser receiver, according to an example;
Fig. 4b is a schematic of laser receiver, according to an example;
Fig. 5 is a schematic a method for determining the laser deflection, according to an example;
Fig. 6 is a schematic a method for determining a future position of the target, according to an example; and
Fig. 7 is a schematic of the system for determining an impact zone of a shot from a shooting device on a target, according to the invention.

### DETAILED DESCRIPTION

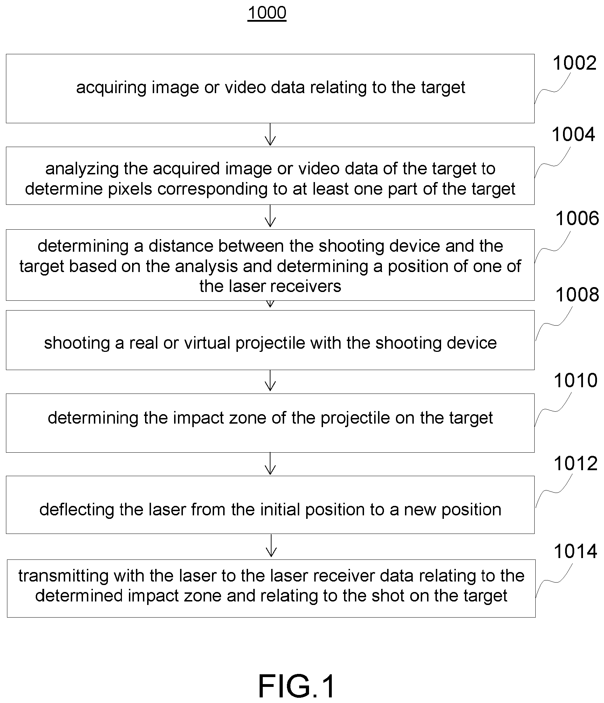

The invention relates to a method 1000 for improving a shooting training with a shooting device on a target. Figure 1 represents a flow diagram of a method 1000 for improving a shooting training with a shooting device on a target, according to the invention. The shooting device W comprises a laser L having an initial position and the target T comprises one or more laser receivers R.

The method 1000 may be used for live exercise training in which multiple players are training. In another example, the method 1000 may be used in a shooting game, such as a laser game. For example, each user may hold a shooting device and be a target at the same time. In another example, some users may hold a shooting device and others may be a target. The target T corresponds to a user or a body area of a user.

The shooting device W may be a firearm, such as a gun, that launches projectiles such as ammunitions or bullets. In another example, the device W is not required to fire any ammunition, the shot may be calculated virtually.

At block 1002, the method 1000 comprises acquiring image or video data relating to the target with a camera comprised in the shooting device. For example, the shooting device W of a user may comprise a camera C which takes images and/or videos of a scene comprising another user. The camera C may be sensitive to infrared light in order to take images or videos in the dark.

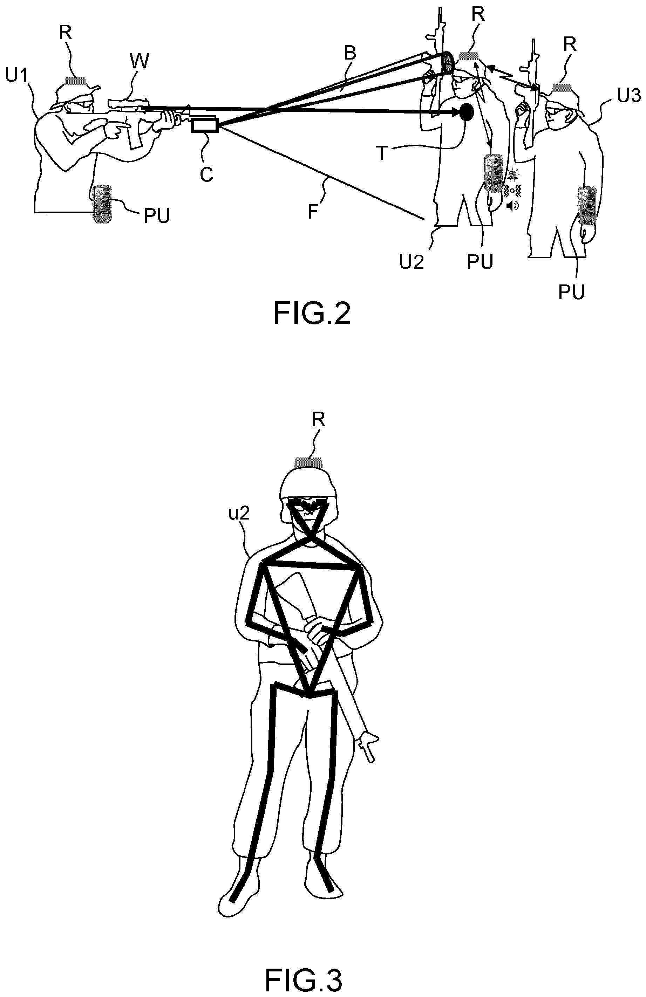

As illustrated in Figure 2 representing a schematic of the method 1000 for determining an impact zone of a shot from a shooting device W on a target T in use, according to an example, a first user U1 may hold a shooting device and aim at another user. In this example, the method 1000 is implemented by a system 100. The system 100 comprises means to implement the method 1000. In particular, the system 100 comprises the camera C comprised in the shooting device W of the first user U1 takes a photo and/or a video of a scene that comprises the second user U2, and therefore comprises the target T. In this example, the target T is a body area of the second user U2 which is in the field of view F of the camera C.

The shooting device W comprises a trigger Trig to shoot a projectile on the target T. In an example, the acquisition of the image or video data being triggered when the trigger is activated. In particular, when the first user U1 pulls the trigger, the photo and/or video is acquired automatically. In an example, the camera stream is activated as soon as the trigger Trig is activated, which is determined using an inertial measurement unit.

At block 1004, the method comprises analyzing the acquired image or video data of the target T to determine pixels corresponding to at least one part of the target T. For example, the analysis may comprise using a stance calculation algorithm based on neural networks.

The determination of pixels corresponding to at least one part of the target T is illustrated in Figure 3 representing a schematic of a method for determining an impact zone of a shot from a shooting device W on a target T, according to an example.

Figure 3 shows an example of an acquired image of the target T, i.e. the second user U2. In this example, the target T is detected by detecting the stance of the second user U2. In particular, the camera stream, i.e. the acquired image or video data is processed either locally on the camera C or transmitted to a processing unit PU using a dedicated interface, such as Wi-Fi or USB (or similar) in order to extract the stance of the second user U2. The processing unit PU may be held by the first user U1 or be a dedicated service on a remote location serving as a computing node for multiple shooters.

The camera C has previously been aligned and calibrated. For example, a database may be used, the database listing standard distances between different body key points. For example a database such as the NASA Standard Human Body Model and the human body stance may be used.

At block 1006, the method comprises determining a distance between the shooting device and the target based on the analysis and determining a position of one of the laser receivers.

The standard distances between different body key points together with the camera parameters (such as the optical parameters of the lens) determined previously may be used to determine the body distance between the shooting device and the target T, i.e. the second user U2.

Additionally, the distance may be determined based on a GPS position of the users. In particular, each user may hold a GPS transmitter, for example comprised in the processing unit PU, which enables continuous tracking of the GPS position of each user.

Additionally or alternatively, the first user U1 may hold a laser telemeter to detect the distance between the shooting device the second user U2.

If multiple users are detected in the image or video data, the distance is calculated per user and subsequent processing is performed on a user basis, then rejecting users that do not cross the ammunition's ballistic path.

At block 1008, the method comprises shooting a virtual or a real projectile with the shooting device.

In particular, the first user U1 may shoot blank ammunition, aiming at the target T, which is the second user U2 or a body area of the second user U2.

As indicated before, the previous steps may be triggered when the first user U1 pulls the trigger Trigg. When the first user U1 pulls the trigger Trig, a non-lethal projectile may also be shot from the shooting device W. Therefore, the previous steps and the projectile being shot may be completed simultaneously.

At block 1010, the method comprises determining the impact zone of the projectile on the target T by calculating a trajectory from the shooting device to the target T based on the distance determination and ballistic data from the projectile.

The ballistic data may include the type of ammunition and the type of shooting device W.

The trajectory of the projectile may be calculated by the processing unit PU of user U1 in which the ballistic data from the projectile are stored. In particular, the shooting device W and the ammunition used may be known, and therefore the ballistic properties. Using the determined distance obtained by the, the projectile drop is calculated. The theoretical hit point is determined analogous to the dynamic hit determination.

For example, the processing unit PU of user U1 may calculate if the projectile has hit the target T, and/or which area of the target has been hit, corresponding to the impact zone on the target.

Additionally, at block 1012, the method 1000 comprises deflecting the laser L from the initial position to a new position based on the determined position of said one laser receiver.

At block 1014, the method 1000 comprises transmitting with the laser at the new position to the laser receiver data relating to the determined impact zone and relating to the shot on the target.

The processing unit PU of the user U1 calculates the position of the receiver of the second user U2 in the shooting device coordinates frame. Further, the processing unit PU then deflects the shooting device mounted steerable laser to aim at the target receiver. Data are then transmitted to the laser receiver of the second user U2 for further processing.

For example, as shown in Figure 2, each user may comprise a receiver R for receiving data relating to the shot. The data may include a type of ammunition, identification information about the first user U1 and/or the second user U2, a time stamp (when the trigger has been activated) and/or target coordinates (corresponding to the body area which has been hit). The transmitted data enable the second user U2 assessing damage locally and warning them that they have been hit. For example, a light or a sound signal may be used to warn the user U2. Additional step may be taken like deactivating U2 shooting device.

Further, damage assessment information may be sent by the processing unit of the second user U2 to an exercise monitoring station for higher-level scenario control and later debriefing analysis.

The target may comprise only one laser receiver R. for example on the helmet H. Alternatively, the target may comprise several receivers R. The processing unit PU may select one of the receivers. For example, the processing Unit may select the receiver which is visible on the image or video data or randomly pick one of the receivers. The receiver R may be comprised in the processing unit PU or may be separate. For example, the receiver R may be placed on the helmet of the second user U2 and the data may be transmitted via Bluetooth to the PU. Alternatively, the shooting device may comprise a laser L, and the data may be transmitted to the receiver R via a laser beam B.

The laser beam B is deflected to aim at the receiver R in order to transmit the data. For example, the shooting device W may comprise a system for deflecting the laser L, such as micro-electromechanical systems.

The receiver R is placed in the field of view F of the camera C, which enables the deflection of the laser L. In particular, the image and/or video data may be analyzed to calculate the deflection of the laser needed to reach the receiver R.

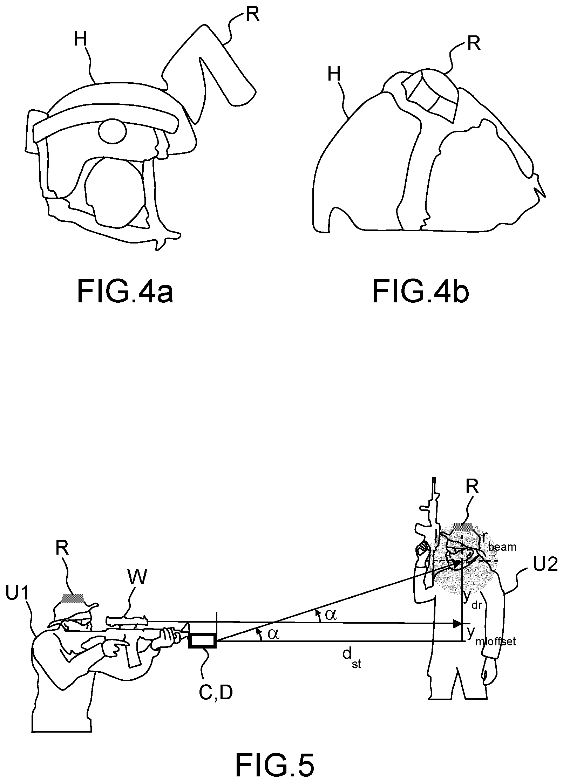

Figure 5 shows a method for determining the laser deflection, according to an example.

Using the determined body stance and its dimensions, the position of the laser receiver R on the target T can be determined. The laser L is deflected to a position (dxₐₚₜₚ, dyₐₚₜₚ) using the MEMS mirrors and transmits the data to the receiver.

The following formulas may be used to define the deflection of the laser: $dst = \frac{ydr + ymloffset}{sin \left(α\right)} α = arcsin \left(\frac{ydr + ymloffset}{dst}\right)$ wherein:
*dst* represents the necessary distance to the receiver for a given angle α such that the receiver can receive the data
*ydr* represents the distance between the receiver and the target (where the projectile hits the second user U2).
*ymloffset* represents the distance between the spot on the target seen through the gun sights and the target (where the projectile hits the second user U2).

The method 1000 may further comprise: acquiring further image or video data relating to the target T prior to the step of transmitting data relating to the shot on the target T. In particular, the target T being hit by the projectile may engender a different position or stance of the second user U2. For example, the second user U2 may fall on the ground or run away. Therefore, the position of the receiver R may be different from that at the time the image or video data was acquired.

The diameter of the laser beam B may be adapted (increased or decreased) on the laser L depending on the estimated distance to enable close combat training, that is if several users are in the same area, or if the laser spot has an elliptical shape.

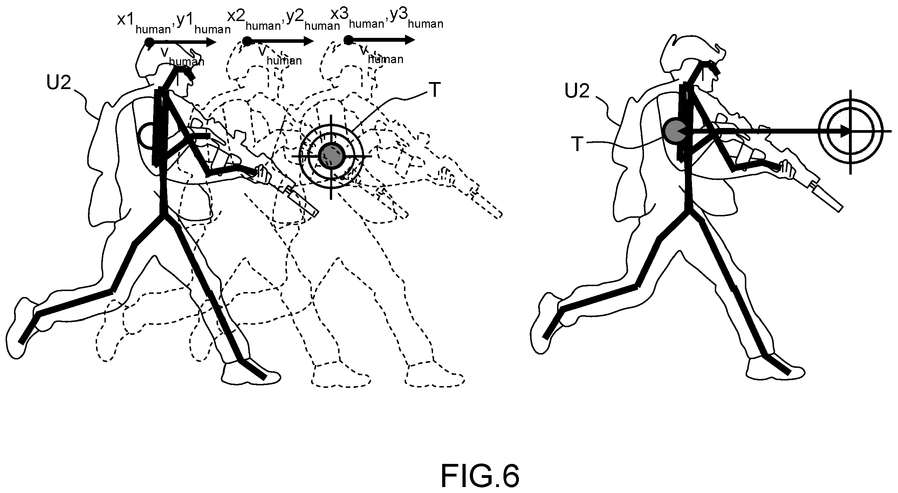

As illustrated in Figure 6, the target T and the shooting device W may be moving. For example, the second user U2 may be running. Therefore, in an example, the target T is moving and the analysis step may comprise: analyzing the motion of the target T and determining a velocity of the target T with respect to the shooting device coordinate frame, and wherein the impact zone determination step comprises predicting the target position when the projectile reaches the target T. For example, the velocity may be determined by analyzing several images of the target and determining the position of a same spot of the target on the different images. Alternatively, the velocity may be determined from a video of the target.

The tracking of the body stance of the user U2 enables determining the instantaneous velocity vₕᵤₘₐₙ of the tracked user and its position in the immediate future in the potentially moving coordinate's frame of the shooting device. Using the determined velocity, the distance estimation between the shooting device W and the target T as well as the ballistic properties of the ammunition, the time delayed impact point may be calculated when shooting with lead.

In an example, the data is transmitted if the projectile hits the target. For example, if the theoretical impact point coincides with the body, this information may be transmitted to the receiver R.

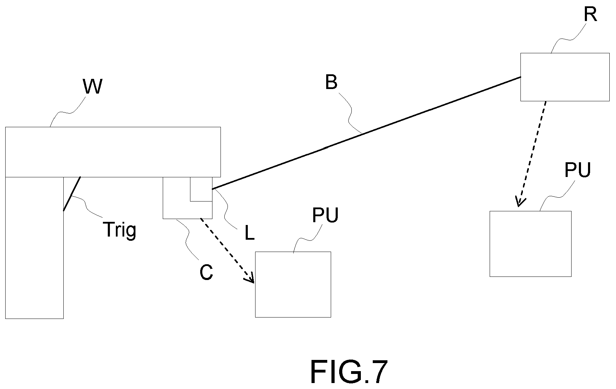

The invention relates to a system 100 for improving a shooting training with a shooting device on a target. Figure 7 illustrate a system 100 according to the invention. The system 100 is configured to implement the method 1000 described above.

As illustrated in Figure 7, the system 100 comprises a shooting device W for shooting projectiles and comprising a camera C for acquiring image or video data relating to the target. The camera C may be sensitive to infrared light in order to be used at night or in dark conditions (for example, inside a building with no light). The shooting device W comprises a laser L having an initial position.

The camera C may comprise a system for analysing the images or videos and therefore detect the stance of the second user U2. Therefore, the camera may be implemented using hardware, software, and/or a combination thereof in order to analyze the image and video data.

Alternatively, the camera acquires the image and video data and transmits the data to a processing unit PU for further analysis. In that case, the camera may comprise a Bluetooth module to communicate with the processing unit PU. In particular, the camera C may transmit the image and video data to the processing unit PU via Bluetooth or local Wi-Fi. The camera C may comprise a power supply. For example, WO 2020/079157 describes a camera that may be used.

The camera C comprise a laser source L for transmitting data. The laser source L may use MEMS deflector and may be steerable to any position in the image.

The system 100 further comprises one or more receivers for receiving the data relating to the determined impact zone and relating to the shot on the target.

The shooting device further comprises a deflecting system configured to aim the laser at the one or more receivers.

Figure 4a and Figure 4b show two examples of receivers R placed on a helmet H of a user, the receivers R being laser receivers. In Figure 4a, the receiver is placed on a harness which is placed on the helmet H. The harness enables to mount multiple laser receivers around the head to detect incoming signals coming from different directions. In Figure 4b, the receiver is placed on the top part of the helmet H. In that case, the laser receivers R may be able to detect a laser beam B with a 360-degree-angle. Therefore, the data may be transmitted even if the first user U1 is behind the second user U2.

In another example, the system 100 comprises multiple receivers R. For example, the system 100 may comprise one receiver which is placed on the helmet H of the user and a second receiver placed on the chest of the user. This is advantageous as it enables transferring data when several users are in close to each other or in case a particular sensor is hidden by any obstacle.

In an example, the deflecting system comprises micro-electro-mechanical systems (MEMS). MEMS enable compact and fast solutions to deflect the laser.

In an example, the diameter of the laser L is adjustable based on the analysis of the video of image data.

The system 100 further comprises a processing unit PU - a processing unit comprising code instructions for analyzing the acquired image or video data of the target to determine pixels corresponding to at least one part of the target; for determining a distance between the shooting device and the target based on the analysis, determining a position of one of the laser receivers, for determining after a shooting of a projectile, the impact zone of the projectile on the target by calculating a trajectory from the shooting device on the target, based on the distance determination and ballistic data of the projectile deflecting the laser from the initial position to a new position based on the determined position of the of said one laser receiver; and transmitting with the laser at the new position to the laser receiver data relating to the determined impact zone and relating to the shot on the target.

The processing unit PU of the first user U1 may comprise an artificial intelligence controller implementing image detection algorithms. Additionally, the processing unit PU of the second user U2 may comprise an acoustic indicator and an optical indicator or a vibration device to warn the second user U2 that they have been hit.

The processing unit PU may be implemented using hardware, software, and/or a combination thereof. For example, hardware devices may be implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner. Software may include a computer program, program code, instructions, or some combination thereof, for independently or collectively instructing or configuring a hardware device to operate as desired. The computer program and/or program code may include program or computer-readable instructions, software components, software modules, data files, data structures, and/or the like, capable of being implemented by one or more hardware devices, such as one or more of the hardware devices mentioned above. When a hardware device is a computer processing device (e.g. CPU, a controller, an ALU, a digital signal processor, a microcomputer, a microprocessor, etc.), the computer processing device may be configured to carry out program code by performing arithmetical, logical, and input/output operations, according to the program code. Each unit may also include one or more storage devices. The one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof, for one or more operating systems and/or for implementing the example embodiments described herein. The computer programs, program code, instructions, or some combination thereof, may also be loaded from a separate computer readable storage medium into the one or more storage devices and/or one or more computer processing devices using a drive mechanism. Such separate computer readable storage medium may include a Universal Serial Bus (USB) flash drive, a memory stick, a Blu-ray/DVD/CD-ROM drive, a memory card, and/or other like computer readable storage media.

The processing unit PU may further comprise a Bluetooth and Wi-Fi module to receive the image and video data from the camera and the shot information from the laser receiver. The processing unit PU may further comprise a power supply.

In an example, the processing unit PU may be a standard smartphone with graphic processing unit functionality. The phone may run an Android operating system. Alternatively, the processing unit PU may be a dedicated Linux platform.

In an example, the processing unit may be the device for shot analysis described in WO 2020/079157.

The invention also concerns a computer program product, said computer program product comprising code instructions for performing, when executed by a processing unit, the steps of:
- analyzing the acquired image or video data of the target to determine pixels corresponding to at least one part of the target;
- determining a distance between the shooting device and the target based on the analysis and determining a position of one of the laser receivers;
- determining the impact zone of the projectile on the target by calculating a trajectory from the shooting device to the target based on the distance determination and ballistic data from the projectile;
- deflecting the laser from the initial position to a new position based on the determined position of the of said one laser receiver; and
- transmitting with the laser at the new position to the laser receiver data relating to the determined impact zone and relating to the shot on the target.

These steps may be implemented by the processing unit PU described above.

The present description illustrates one embodiment of the invention, but is not limiting. The example was chosen to allow a good understanding of the principles of the invention, and one specific application, but it is not exhaustive, and the description should allow a person skilled in the art to provide modifications and implementation variants while keeping the same principles. Additionally, the system has been implemented in the examples with one receiver placed on a helmet, the receiver may be placed on the chest for example or on any other body part of the users. Additionally, several receivers may be used. Further, the invention has been illustrated in shooting training, the invention may also be used in games, such as laser game.

## Claims

1. A method (1000) for improving a shooting training with a shooting device (W) on a target (T), the shooting device comprising a laser (L) having an initial position and the target comprising one or more laser receivers (R), the method comprising:
- (1002) acquiring image or video data relating to the target with a camera comprised in the shooting device;
- (1004) analyzing the acquired image or video data of the target to determine pixels corresponding to at least one part of the target;
- (1006) determining a distance between the shooting device and the target based on the analysis and determining a position of one of the laser receivers;
- (1008) shooting a real or virtual projectile with the shooting device;
- (1010) determining the impact zone of the projectile on the target by calculating a trajectory from the shooting device to the target based on the distance determination and ballistic data from the projectile;
- (1012) deflecting the laser from the initial position to a new position based on the determined position of the of said one laser receiver; and
- (1014) transmitting with the laser at the new position to the laser receiver data relating to the determined impact zone and relating to the shot on the target.

2. A method according to claim 1, wherein the data is transmitted if the projectile hits the target.

3. A method according to claims 1 or 2, wherein the method comprises, acquiring further image or video data relating to the target prior to the step of transmitting data relating to the shot on the target.

4. A method according to any of the preceding claims, wherein the data relating to the shot on the target are chosen in a group consisting in a type of ammunition, identification information about a first user (U1) shooting the projectile, a time stamp and/or target coordinates and a combination thereof.

5. A method according any of the preceding claims, wherein the shooting device comprises a trigger (T) to shoot the projectile on the target, the acquisition of the image or video data being triggered when the trigger is activated.

6. A method according to any of the preceding claims, wherein the target is moving and the analysis step comprises: analyzing the motion of the target and determining a velocity of the target, and wherein the impact zone determination step comprises predicting the target position when the projectile reaches the target.

7. A system (100) for improving a shooting training with a shooting device (W) on a target (T), the system comprising means to implement the method of any one of claims 1 to 6, the means comprising:
- the shooting device (W) for shooting projectiles and comprising a camera (C) for acquiring image or video data relating to the target, the shooting device further comprising a laser (L) having an initial position and a deflecting system (D) configured to aim the laser at one or more laser receivers;
- one or more laser receivers (R) for receiving data relating to a determined impact zone and relating to the shot on the target; and
- a processing unit (PU) comprising code instructions for analyzing the acquired image or video data of the target to determine pixels corresponding to at least one part of the target; for determining a distance between the shooting device and the target based on the analysis; for determining a position of one of the laser receivers; for determining after a shooting of a projectile, the impact zone of the projectile on the target by calculating a trajectory from the shooting device on the target, based on the distance determination and ballistic data of the projectile; for deflecting the laser from the initial position to a new position based on the determined position of said one laser receiver; and for transmitting with the laser at the new position to the laser receiver the data relating to the determined impact zone and relating to the shot on the target.

8. A system according to claim 7, wherein the deflecting system comprises micro-electromechanical systems.

9. A system according to claims 7 or 8, wherein the diameter of the laser is adjustable based on the analysis of the video of image data.

10. A computer program product, said computer program product comprising code instructions for performing, when executed by a processing unit of a system as claimed in claim 7, the steps of:
- analyzing an acquired image or video data of a target to determine pixels corresponding to at least one part of the target;
- determining a distance between the shooting device and the target based on the analysis;
- determining a position of one of the laser receivers;
- determining an impact zone of the projectile on the target by calculating a trajectory from the shooting device to the target based on the distance determination and ballistic data from the projectile;
- deflecting the laser from an initial position to a new position based on the determined position of said one laser receiver; and
- transmitting with the laser at the new position to said one laser receiver data relating to the determined impact zone and relating to the shot on the target.

## Patentansprüche

1. Verfahren (1000) zum Verbessern eines Schießtrainings mit einer Schießvorrichtung (W) auf ein Ziel (T), wobei die Schießvorrichtung einen Laser (L) mit einer Ausgangsposition und das Ziel einen oder mehrere Laserempfänger (R) umfasst, wobei das Verfahren Folgendes umfasst:
- (1002) Erfassen von Bild- oder Videodaten des Ziels mit einer in der Schießvorrichtung enthaltenen Kamera;
- (1004) Analysieren der erfassten Bild- oder Videodaten des Ziels, um Pixel zu bestimmen, die mindestens einem Teil des Ziels entsprechen;
- (1006) Bestimmen einer Entfernung zwischen der Schießvorrichtung und dem Ziel auf der Grundlage der Analyse und Bestimmen der Position eines der Laserempfänger;
- (1008) Abschießen eines realen oder virtuellen Projektils mit der Schießvorrichtung;
- (1010) Bestimmen der Auftreffzone des Projektils auf dem Ziel durch Berechnen einer Flugbahn von der Schießvorrichtung zum Ziel auf der Grundlage der Entfernungsbestimmung und der ballistischen Daten des Projektils;
- (1012) Ablenken des Lasers von der Ausgangsposition zu einer neuen Position basierend auf der bestimmten Position des einen Laserempfängers; und
- (1014) Übertragen von Daten in Bezug auf die bestimmte Auftreffzone und den Schuss auf das Ziel, mit dem Laser an der neuen Position, an den Laserempfänger.

2. Verfahren nach Anspruch 1, wobei die Daten übertragen werden, wenn das Projektil das Ziel trifft.

3. Verfahren nach Anspruch 1 oder 2, wobei das Verfahren das Erfassen weiterer Bild- oder Videodaten in Bezug auf das Ziel vor dem Schritt des Übertragens von Daten in Bezug auf den Schuss auf das Ziel umfasst.

4. Verfahren nach einem der vorhergehenden Ansprüche, wobei die Daten in Bezug auf den Schuss auf das Ziel aus einer Gruppe ausgewählt werden, die aus einer Munitionsart, Identifikationsinformationen über einen ersten Benutzer (U1), der das Projektil abfeuert, einem Zeitstempel und/oder Zielkoordinaten und eine Kombination davon besteht.

5. Verfahren nach einem der vorhergehenden Ansprüche, wobei die Schussvorrichtung einen Auslöser (T) zum Abfeuern des Projektils auf das Ziel umfasst und das Erfassen der Bild- oder Videodaten beim Betätigen des Auslösers ausgelöst wird.

6. Verfahren nach einem der vorstehenden Ansprüche, wobei sich das Ziel bewegt und der Analyseschritt Folgendes umfasst: Analysieren der Bewegung des Ziels und Bestimmen einer Geschwindigkeit des Ziels, und wobei der Schritt zum Bestimmen der Auftreffzone das Vorhersagen der Zielposition beim Auftreffen des Projektils auf das Ziel umfasst.

7. System (100) zum Verbessern eines Schießtrainings mit einer Schießvorrichtung (W) auf ein Ziel (T), wobei das System Mittel zur Durchführung des Verfahrens nach einem der Ansprüche 1 bis 6 umfasst, wobei die Mittel Folgendes umfassen:
- die Schussvorrichtung (W) zum Abschießen von Projektilen und umfassend eine Kamera (C) zum Erfassen von Bild- oder Videodaten in Bezug auf das Ziel, die Schießvorrichtung ferner umfassend einen Laser (L) mit einer Anfangsposition und ein Ablenksystem (D), das so konfiguriert ist, dass der Laser auf einen oder mehrere Laserempfänger gerichtet wird;
- einen oder mehrere Laserempfänger (R) zum Empfangen von Daten in Bezug auf eine bestimmte Auftreffzone und in Bezug auf den Schuss auf das Ziel; und
- eine Verarbeitungseinheit (PU), die Codeanweisungen zum Analysieren der erfassten Bild- oder Videodaten des Ziels umfasst, um Pixel zu bestimmen, die mindestens einem Teil des Ziels entsprechen; zum Bestimmen einer Entfernung zwischen der Schießvorrichtung und dem Ziel auf Grundlage der Analyse; zum Bestimmen einer Position eines der Laserempfänger; zum Bestimmen der Auftreffzone des Projektils auf dem Ziel nach dem Abschuss eines Projektils durch Berechnen einer Flugbahn von der Schießvorrichtung zum Ziel auf Grundlage der Entfernungsbestimmung und der ballistischen Daten des Projektils; zum Ablenken des Lasers von der Ausgangsposition zu einer neuen Position basierend auf der bestimmten Position des einen Laserempfängers; und zum Übertragen der Daten in Bezug auf die bestimmte Auftreffzone und den Schuss auf das Ziel, mit dem Laser an der neuen Position, an den Laserempfänger.

8. System nach Anspruch 7, wobei das Ablenksystem mikroelektromechanische Systeme umfasst.

9. System nach Anspruch 7 oder 8, wobei der Durchmesser des Lasers auf der Grundlage der Analyse der Video- oder Bilddaten einstellbar ist.

10. Computerprogrammprodukt, wobei das Computerprogrammprodukt Codeanweisungen umfasst, die bei Ausführung durch eine Verarbeitungseinheit eines Systems nach Anspruch 7 die folgenden Schritte ausführen:
- Analysieren von erfassten Bild- oder Videodaten eines Ziels, um Pixel zu bestimmen, die mindestens einem Teil des Ziels entsprechen;
- Bestimmen der Entfernung zwischen Schießvorrichtung und Ziel auf Grundlage der Analyse;
- Bestimmen einer Position eines der Laserempfänger;
- Bestimmen einer Auftreffzone des Projektils auf dem Ziel durch Berechnen einer Flugbahn von der Schießvorrichtung zum Ziel auf der Grundlage der Entfernungsbestimmung und der ballistischen Daten des Projektils;
- Ablenken des Lasers von einer Ausgangsposition zu einer neuen Position basierend auf der bestimmten Position des einen Laserempfängers; und
- Übertragen von Daten, die sich auf die bestimmte Auftreffzone und den Schuss auf das Ziel beziehen, mit dem Laser an der neuen Position, an den einen Laserempfänger.

## Revendications

1. Procédé (1000) d'amélioration d'un entraînement au tir avec un dispositif de tir (W) sur une cible (T), le dispositif de tir comprenant un laser (L) présentant une position initiale et la cible comprenant un ou plusieurs récepteurs laser (R), le procédé comprenant :
- (1002) acquisition de données d'image ou vidéo relatives à la cible avec une caméra intégrée au dispositif de tir ;
- (1004) analyse des données d'image ou vidéo acquises de la cible pour déterminer les pixels correspondant à au moins une partie de la cible ;
- (1006) détermination d'une distance entre le dispositif de tir et la cible sur la base de l'analyse et détermination de la position de l'un des récepteurs laser ;
- (1008) tir d'un projectile réel ou virtuel avec le dispositif de tir ;
- (1010) détermination de la zone d'impact du projectile sur la cible en calculant une trajectoire du dispositif de tir à la cible sur la base de la détermination de la distance et des données balistiques du projectile ;
- (1012) déviation du laser de la position initiale vers une nouvelle position sur la base de la position déterminée dudit un récepteur laser ; et
- (1014) transmission avec le laser dans la nouvelle position au récepteur laser des données relatives à la zone d'impact déterminée et relatives au tir sur la cible.

2. Procédé selon la revendication 1, dans lequel les données sont transmises si le projectile atteint la cible.

3. Procédé selon la revendication 1 ou 2, dans lequel le procédé comprend l'acquisition de données d'image ou vidéo supplémentaires relatives à la cible avant l'étape de transmission des données relatives au tir sur la cible.

4. Procédé selon l'une quelconque des revendications précédentes, dans lequel les données relatives au tir sur la cible sont sélectionnées parmi un groupe comprenant un type de munition, des informations d'identification concernant un premier utilisateur (U1) ayant tiré le projectile et un horodatage et/ou des coordonnées de la cible et toute combinaison de celles-ci.

5. Procédé selon l'une quelconque des revendications précédentes, dans lequel le dispositif de tir comprend une détente (T) pour tirer le projectile sur la cible, l'acquisition des données d'image ou vidéo étant déclenchée lorsque la détente est activé.

6. Procédé selon l'une quelconque des revendications précédentes, dans lequel la cible est en mouvement et l'étape d'analyse comprend : l'analyse du mouvement de la cible et la détermination d'une vitesse de la cible, et dans lequel l'étape de détermination de la zone d'impact comprend la prédiction de la position de la cible lorsque le projectile l'atteint.

7. Système (100) d'amélioration d'un entraînement au tir avec un dispositif de tir (W) sur une cible (T), le système comprenant des moyens pour mettre en œuvre le procédé selon l'une quelconque des revendications 1 à 6, les moyens comprenant :
- le dispositif de tir (W) destiné à tirer des projectiles et comprenant une caméra (C) pour acquérir des données d'image ou vidéo relatives à la cible, le dispositif de tir comprenant en outre un laser (L) présentant une position initiale et un système de déviation (D) configuré pour diriger le laser vers un ou plusieurs récepteurs laser ;
- un ou plusieurs récepteurs laser (R) destinés à recevoir des données relatives à une zone d'impact déterminée et relatives au tir sur la cible ; et
- une unité de traitement (PU) comprenant des instructions de code pour analyser les données d'image ou vidéo acquises de la cible afin de déterminer les pixels correspondant à au moins une partie de la cible ; pour déterminer une distance entre le dispositif de tir et la cible sur la base de l'analyse ; pour déterminer la position de l'un des récepteurs laser ; pour déterminer, après le tir d'un projectile, la zone d'impact du projectile sur la cible en calculant une trajectoire depuis le dispositif de tir jusqu'à la cible, sur la base de la détermination de la distance et des données balistiques du projectile ; pour dévier le laser de la position initiale vers une nouvelle position sur la base de la position déterminée dudit un récepteur laser ; et pour transmettre, avec le laser dans la nouvelle position, au récepteur laser les données relatives à la zone d'impact déterminée et relatives au tir sur la cible.

8. Système selon la revendication 7, dans lequel le système de déviation comprend des systèmes micro-électromécaniques.

9. Système selon la revendication 7 ou 8, dans lequel le diamètre du laser est ajustable sur la base de l'analyse des données vidéo ou d'image.

10. Produit de programme informatique, ledit produit de programme informatique comprenant des instructions de code permettant d'effectuer, lorsqu'il est exécuté par une unité de traitement d'un système selon la revendication 7, les étapes de :
- analyse de données d'image ou de vidéo acquises d'une cible pour déterminer les pixels correspondant à au moins une partie de la cible ;
- détermination d'une distance entre le dispositif de tir et la cible sur la base de l'analyse ;
- détermination de la position de l'un des récepteurs laser ;
- détermination d'une zone d'impact du projectile sur la cible en calculant une trajectoire du dispositif de tir à la cible sur la base de la détermination de la distance et des données balistiques du projectile ;
- déviation du laser d'une position initiale vers une nouvelle position sur la base de la position déterminée dudit un récepteur laser ; et
- transmission avec le laser dans la nouvelle position audit un récepteur laser des données relatives à la zone d'impact déterminée et relatives au tir sur la cible.
